# EUROPÄISCHE PATENTSCHRIFT

(11) **EP 3 114 569 B1**
(45) Veröffentlichungstag und Bekanntmachung des Hinweises auf die Patenterteilung: **27.11.2019**
(21) Anmeldenummer: 15719153.7
(22) Anmeldetag: 07.04.2015
(51) Int. Cl.: G06F 11/36

(54) **DIE ERFINDUNG BETRIFFT EIN VERFAHREN ZUR ÜBERPRÜFUNG VON INVARIANTEN IN PARALLELEN PROGRAMMEN**
METHOD FOR CHECKING INVARIANTS IN PARALLEL PROGRAMS
PROCÉDÉ DE VÉRIFICATION D'INVARIANTS DANS DES PROGRAMMES PARALLÈLES

(30) Priorität: 28.05.2014 DE 102014210192
(43) Veröffentlichungstag der Anmeldung: 11.01.2017
(73) Patentinhaber: Siemens Aktiengesellschaft, 80333 München (DE)
(72) Erfinder: SCHÜLE, Tobias, 80636 München (DE)
(86) Internationale Anmeldenummer: PCT/EP2015/057469
(87) Internationale Veröffentlichungsnummer: WO 2015/180877

(56) Entgegenhaltungen:
- DANIEL SCHWARTZ-NARBONNE ET AL: "Parallel assertions for debugging parallel programs", FORMAL METHODS AND MODELS FOR CODESIGN (MEMOCODE), 2011 9TH IEEE/ACM INTERNATIONAL CONFERENCE ON, IEEE, 11. Juli 2011 (2011-07-11), Seiten 181-190, XP031912068, DOI: 10.1109/MEMCOD.2011.5970525 ISBN: 978-1-4577-0117-7
- DANIEL SCHWARTZ-NARBONNE ET AL: "Parallel Assertions for Architectures with Weak Memory Models", 3. Oktober 2012 (2012-10-03), AUTOMATED TECHNOLOGY FOR VERIFICATION AND ANALYSIS, SPRINGER BERLIN HEIDELBERG, BERLIN, HEIDELBERG, PAGE(S) 254 - 268, XP047019354, ISBN: 978-3-642-33385-9 das ganze Dokument

## Beschreibung

Die meisten modernen Prozessoren bestehen aus mehreren, parallel arbeitenden Prozessorkernen. Um die Leistung solcher Multicore-Prozessoren ausschöpfen zu können, müssen die darauf auszuführenden Anwendungen parallelisiert werden.

Die Entwicklung paralleler Software ist jedoch sehr fehleranfällig, zumal die Vielzahl verschiedener Ablaufszenarien in einem parallelen Programm in der Regel nur schwer zu überblicken ist.

Typische Fehler in parallelen bzw. nebenläufigen Programmen sind:
- Verklemmungen (deadlocks), die bei zirkulären Abhängigkeiten zwischen mehreren Threads zu einem Stillstand des Systems führen können.
- Wettlaufsituationen (race conditions), die immer dann auftreten, wenn mehrere Threads ohne Synchronisation auf gemeinsame Daten zugreifen.

Wettlaufsituationen können dabei folgende Ursachen haben:
- Atomaritätsverletzungen (atomicity violations), bei denen eine Operation nur teilweise ausgeführt und vor ihrem Abschluss von einer anderen Operation unterbrochen wird.
- Reihenfolgeverletzungen (order violations), bei denen die beabsichtigte Reihenfolge mehrerer Operationen aufgrund von Optimierungen durch den Compiler oder Prozessor nicht eingehalten wird.
- Sichtbarkeitsverletzungen (visibility violations), bei denen das Ergebnis einer Operation nicht sofort in den Hauptspeicher zurückgeschrieben wird und deshalb für andere Threads unsichtbar ist.

Ein einfaches Beispiel für Atomaritätsverletzungen ist die Inkrementierung einer ganzzahligen Variablen. Hierfür sind üblicherweise drei Schritte notwendig: Lesen des aktuellen Werts aus dem Speicher, Addition von Eins und Speichern des neuen Werts. Werden diese drei Schritte nicht atomar ausgeführt, kann es passieren, dass Veränderungen an der Variablen verlorengehen (lost updates).

Zur Vermeidung solcher Fehler sind spezielle Methoden und Werkzeuge erforderlich, mit denen sich die Korrektheit paralleler Programme überprüfen lässt. Klassische Verfahren wie Test und Debugging reichen dafür aber nicht aus.

Es gibt verschiedene Werkzeuge bzw. Verfahren, die dabei helfen, Fehler in parallelen Programmen aufzufinden. Am weitesten verbreitet sind dynamische Analyseverfahren, bei denen das zu untersuchende Programm ausgeführt und auf Wettlaufsituationen, Verklemmungen etc. untersucht wird.

Beispiele für derartige Werkzeuge sind Intel ® Inspector, Oracle Thread Analyzer, Helgrind/DRD und ThreadSanitizer. Diese bekannten Werkzeuge sind jedoch alle auf relativ einfache Fehler beschränkt. Mit ihnen ist es jedoch nicht möglich, komplexere Eigenschaften wie Invarianten zu überprüfen, wobei unter einer Invariante eine Eigenschaft zu verstehen ist, die in einem bestimmten Programmabschnitt stets erfüllt sein muss. Ein weiterer Nachteil dieser Ansätze ist, dass sie typischerweise erst dann eingesetzt werden, wenn das zu entwickelnde Programm bereits weitgehend fertig ist.

Wie bei der sequenziellen Programmierung ist es sinnvoller, bereits während der Entwicklung Eigenschaften im Programmcode mittels Zusicherungen (assertions) festzuhalten. Ein solcher Ansatz ist beschrieben in: D. Schwartz-Narbonne, F. Liu, T. Pondicherry, D. August, S. Malik. Parallel Assertions for Debugging Parallel Programs. Formal Methods and Models for Codesign (MEMOCODE'11). IEEE, 2011. Auch dieser Ansatz ist jedoch auf relativ einfache Eigenschaften beschränkt und erlaubt es nicht, beliebige Invarianten zu spezifizieren. Außerdem erfordert er Modifikationen am Compiler, was den praktischen Einsatz jedoch stark einschränkt.

Ferner werden, auf dem Vorgenannten aufbauend, in "Parallel Assertions for Architectures with Weak Memory Models" (D. Schwartz-Narbonne, G. Weissenbacher, S. Malikl) eine formale Definition paralleler Zusicherungen (assertions), eine neuartige Zusicherungssprache zur Erkennung komplexer Concurrency-Bugs und eine Betriebssemantik, die deren Bewertung auf Architekturen mit schwachen Speichermodellen ermöglicht, beschrieben.

Die der Erfindung zu Grunde liegende Aufgabe besteht nun darin, ein Verfahren anzugeben, mit dem auch möglichst beliebige Invarianten in parallelen Programmen zur Laufzeit überprüfbar sind.

Diese Aufgabe wird durch die Merkmale des Patentanspruchs 1 erfindungsgemäß gelöst. Die weiteren Ansprüche betreffen bevorzugte Ausgestaltungen der Erfindung.

Die Erfindung betrifft im Wesentlichen ein Verfahren zur Überprüfung von Invarianten in parallelen Programmen mithilfe dynamischer Instrumentierung, bei dem die Invarianten im Source-Code als gewöhnliche Funktionen angegeben und vom Benutzer durch Funktionsaufrufe aktiviert bzw. deaktiviert werden können, bei dem das Programm vor oder während der Ausführung instrumentiert wird, um Zugriffe auf den Hauptspeicher abfangen zu können, bei dem die Adressen der Speicherstellen, von denen eine Invariante abhängt, automatisch aufgezeichnet werden, um Änderungen daran feststellen zu können, bei dem es eine zentrale Datenstruktur gibt, die für jeden Thread eine Invariante, die Adressen der Speicherstellen, von denen die Invariante abhängt, und einen Boole'schen Wert, der angibt, ob die Aufzeichnung aktiv ist, speichert, und bei dem für jeden Lade- und jeden Speicherbefehl durch die Instrumentierung eine entsprechende Bibliotheksfunktion aufgerufen wird, die im Falle von Ladebefehlen die betroffenen Adressen aufzeichnet, sofern die Aufzeichnung aktiviert ist, und im Falle von Speicherbefehlen die betroffenen Invarianten überprüft. Ferner werden bei dem Verfahren, bei dynamisch erzeugten Datenstrukturen, die für die Überprüfung relevanten Adressen nicht nur einmal zu Beginn, sondern bei jeder Änderung einer betroffenen Speicherstelle ermittelt. Der wesentliche Vorteil dieses Verfahrens gegenüber herkömmlichen Ansätzen liegt darin, dass beliebige Invarianten über den Zustand eines parallelen Programms spezifiziert werden können, wodurch nicht nur grundlegende Fehler, wie Wettlaufsituation und Verklemmungen, erkennbar sind, sondern auch Inkonsistenzen in gemeinsam genutzten Datenstrukturen.

Nachfolgend wird die Erfindung anhand von in der Zeichnung dargestellten Ausführungsbeispielen näher erläutert.

Dabei zeigt:
- Figur 1: eine Übersichtsdarstellung eines erfindungsgemäßen Verfahrens zur Überprüfung von Invarianten,
- Figur 2: eine Darstellung einer entsprechende Datenstruktur für die Verwaltung von Invarianten zur Erläuterung des erfindungsgemäßen Verfahrens,
- Figur 3: eine Darstellung zur Erläuterung des Zusammenspiels der Operationen des erfindungsgemäßen Verfahrens,
- Figur 4: ein fehlerhaftes Beispielprogramm zur weiteren Erläuterung des erfindungsgemäßen Verfahrens,
- Figur 5: ein Beispielprogramm zur Erläuterung der fehlerhaften Ausführung des Programms aus Figur 4 aufgrund einer Reihenfolgeverletzung in der Funktion sender(),
- Figur 6: ein Beispielprogramm einer erfindungsgemäßen Erweiterung des Beispielprogramms aus Figur 4 um eine Invariante zur Erkennung der Reihenfolgeverletzung aus Figur 5 und
- Figur 7: eine Darstellung des Programmablaufs und dem Inhalt der Datenstruktur für das Beispiel aus Figur 6.

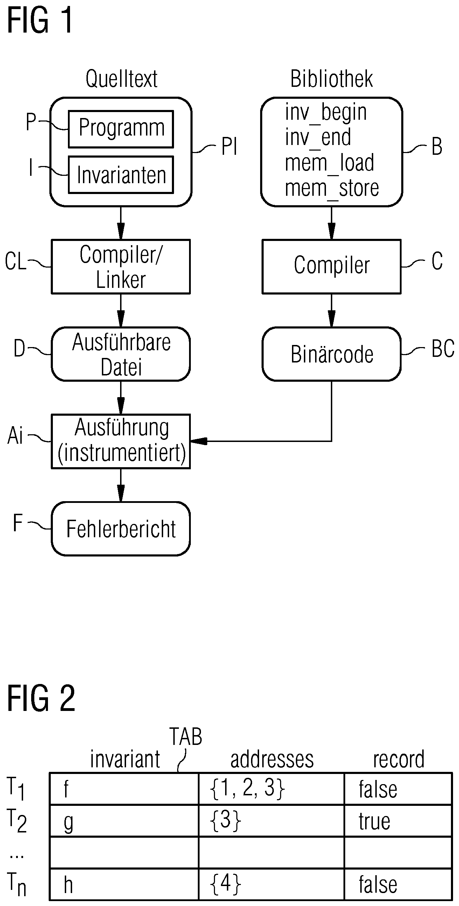

Figur 1 zeigt eine Übersichtsdarstellung zur Erläuterung des Ablaufs eines Ausführungsbeispiels des erfindungsgemäßen Verfahrens zur Überprüfung von Invarianten. Zunächst wird das eigentliche Programm P um die zu überprüfenden Invarianten I im Quelltext PI ergänzt und übersetzt. Das Resultat ist eine ausführbare Datei D, die anschließend instrumentiert wird. Dabei werden sämtliche Lade- und Speicherbefehle durch die Funktionen mem_load und mem_store ersetzt, die Bestandteil einer Bibliothek sind. Diese Bibliothek enthält ferner eine Invariantenbeginn-Funktion inv_begin und eine Invariantenende-Funktion inv_end, mit denen sich der Gültigkeitsbereich von Invarianten durch den Benutzer angeben lässt. Tritt während der Ausführung Ai des instrumentierten Programms ein Fehler auf, wird eine entsprechende Fehlermeldung F ausgegeben. Eine Invariante wird in Form einer parameterlosen Funktion angegeben, die einen Boole'schen Wert zurückliefert, wobei die Funktion "true", wenn die Invariante erfüllt ist, und andernfalls "false" zurückgibt.

Zur Verwaltung der Invarianten ist eine interne Datenstruktur in Form einer Tabelle TAB vorhanden, die in Figur 2 gezeigt ist. In dieser Tabelle werden für jeden Thread T₁...Tₙ der Funktionsname der Invariante sowie die Adressen der Speicherstellen, von denen die Invariante abhängt, gespeichert. Die Adressen werden zur Laufzeit ermittelt, indem während der Ausführung einer Funktion Protokoll über deren Speicherzugriffe geführt wird. Zu diesem Zweck gibt es in der Tabelle für jeden Eintrag zusätzlich ein Flag record, das die Adressaufzeichnung anzeigt. In Figur 2 hängt beispielsweise die durch die Funktion f spezifizierte Invariante des Threads T₁ von den Speicherstellen mit den Adressen 1, 2 und 3 ab und die Aufzeichnung ist abgeschlossen, da das Flag record bereits auf "false" gesetzt ist. Für die durch die Funktion g spezifizierte Invariante des Threads T₂ hingegen läuft die Aufzeichnung noch, da das Flag record noch auf "true" gesetzt ist.

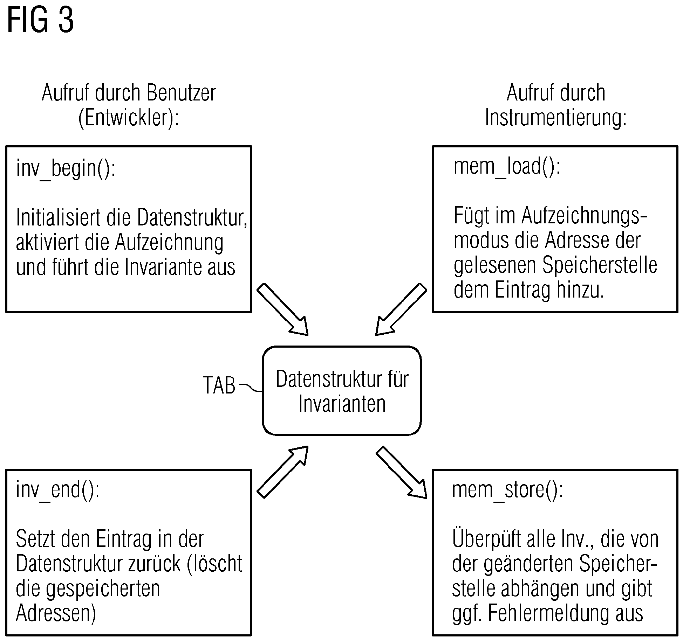

Figur 3 skizziert das Zusammenspiel der Funktionen inv_begin, inv_end und mem_load, mem_store bei Zugriffen auf die zentrale Datenstruktur, wobei erstere - wie bereits erwähnt - durch den Benutzer aufgerufen werden und wobei letztere durch die Instrumentierung bei Ausführung eines Lade- bzw. Speicherbefehls aufgerufen werden.

Die Funktion inv_begin initialisiert die Datenstruktur, aktiviert die Adressaufzeichnung und führt die Invariante aus.

Anschließend wird die Aufzeichnung gestoppt, indem das zum jeweiligen Thread gehörige Flag record wieder auf "false" gesetzt wird.

Am Ende einer Invariantenüberprüfung inv_end wird der entsprechende Eintrag durch Löschen der Adressen zurückgesetzt.

Die Funktion mem_load fügt die Adresse der gelesenen Speicherstelle der Menge addresses in der Tabelle TAB hinzu, allerdings nur, wenn die Aufzeichnung aktiviert ist. Andernfalls bleibt sie wirkungslos.

Die Funktion mem_store reagiert auf Änderungen an Speicherstellen, von denen eine oder mehrere Invarianten abhängen. Dazu wertet sie alle betroffenen Invarianten erneut aus und gibt ggf. eine Fehlermeldung aus, wobei eine Änderung der Speicherstellen bzw. Speicheradressen dazu führen kann, dass eine bislang gültige Invariante nicht mehr gilt bzw. nicht mehr zutrifft, also den Wert "false" aufweist.

Am Ende der Beschreibung ist ein Listing angefügt, das eine prototypische Implementierung des erfindungsgemäßen Verfahrens in der Programmiersprache C++ zeigt.

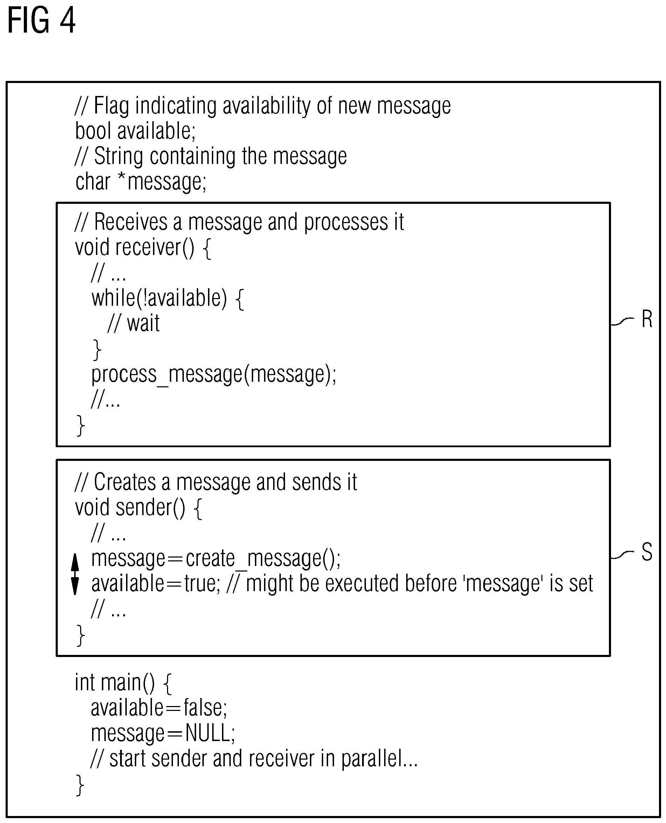

Figur 4 zeigt ein fehlerhaftes Beispielprogramm, das im Folgenden dazu verwendet wird, die Verwendung von Invarianten zu demonstrieren. Das Programm implementiert den Nachrichtenaustausch zwischen einem Sender S und einem Empfänger R, die parallel laufen. Der Nachrichtenaustausch erfolgt über die globalen Variablen available und message. Zu Beginn wird die logische Variable available auf "false" gesetzt und der Zeiger-Variable message, einem Zeiger auf die eigentliche Nachricht, der Wert NULL zugewiesen. Nachdem der Sender durch die Anweisung message = create_message() eine neue Nachricht erzeugt hat, setzt er die Variable available auf "true", um dem Empfänger anzuzeigen, dass er die Nachricht abholen und verarbeiten kann. Das Warten im Empfänger R geschieht mithilfe einer Schleife, die terminiert, sobald die Variable available den logischen Wert "true" angenommen hat.

Das mit diesem Programm beispielhaft demonstrierte Problem besteht darin, dass der Compiler und der Prozessor die Zuweisungen innerhalb der Funktion sender umordnen können und dadurch eine Reihenfolgeverletzung entsteht. Infolgedessen kann es also passieren, dass die Variable available bereits "true" ist, bevor die Zeiger-Variable message auf eine gültige Nachricht zeigt. Somit versucht der Empfänger, einen NULL-Zeiger zu dereferenzieren, wodurch das Programm abstürzt.

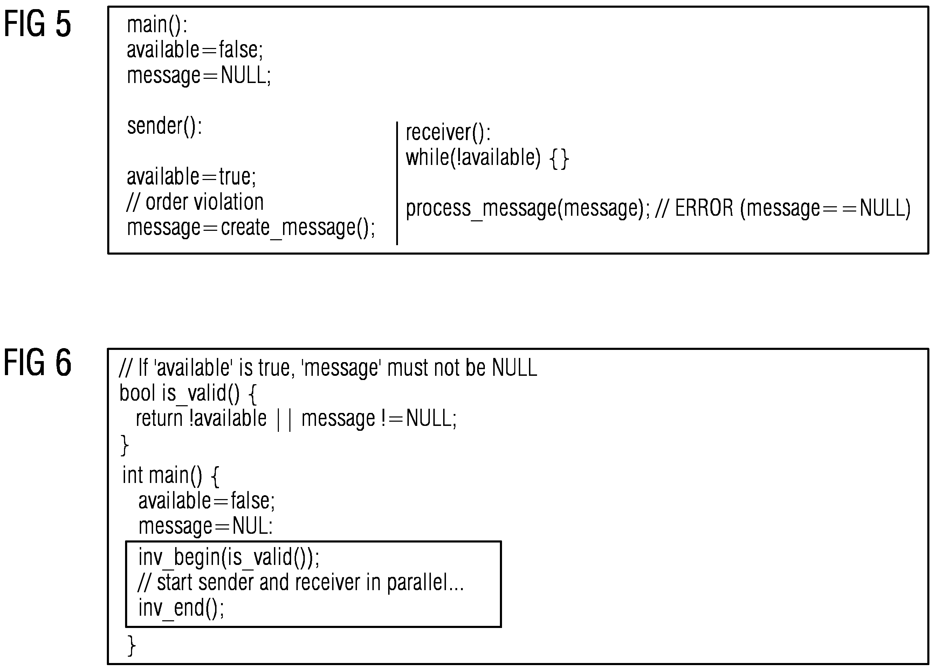

Figur 5 illustriert dieses Verhalten. Man beachte, dass insbesondere Fehler aufgrund von Umordnungen durch den Prozessor oft nur sporadisch auftreten und mittels Testen nur schwer zu finden sind. Der Fehler kann mit dem vorgestellten Verfahren erkannt und abgefangen werden, indem das Programm um eine Invariante ergänzt wird, die sicherstellt, dass die Zeiger-Variable message niemals NULL ist, wenn die Boole'sche Variable available den Wert "true" hat.

Figur 6 zeigt die Invariante und ein entsprechend erweitertes Hauptprogramm, wobei ein paralleler Start des Senders und des Empfängers zwischen den die Invariante begrenzenden Funktionen inv_begin und inv_end eingeschlossen ist.

Eine Invariante in Form einer Funktion is_valid gibt den Wert "true" zurück, wenn "nicht available" oder "message nicht gleich NULL" ist bzw. im Fehlerfall, wenn also available und message=NULL, gibt sie den Wert "false" zurück.

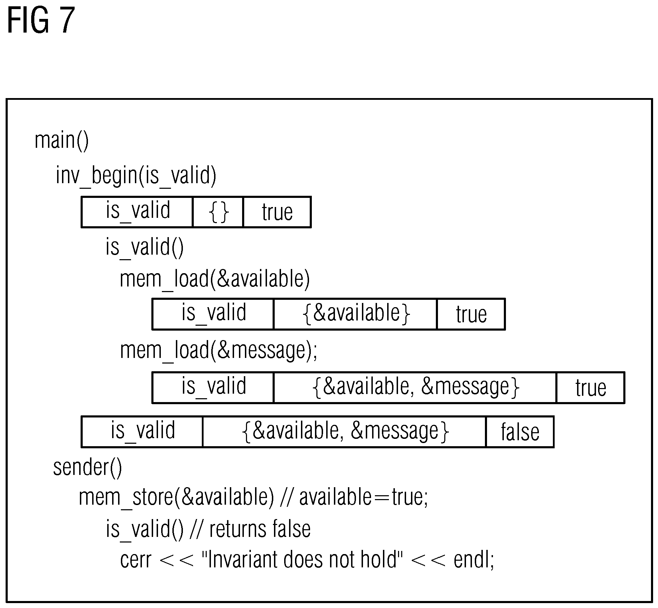

Figur 7 veranschaulicht den Ablauf des vorgestellten Verfahrens sowie die Inhalte der zentralen Datenstruktur TAB für das Beispiel aus Figur 6. Zunächst wird innerhalb der Funktion inv_begin die Datenstruktur TAB initialisiert und die Invariante ausgeführt, also die entsprechende Funktion is_valid aufgerufen. Da die Funktion is_valid die Variablen available und message liest, werden deren zugehörige Adressen &available und &message in der Datenstruktur TAB unter addresses aufgezeichnet. Sobald der Sender sender die Variable available auf "true" setzt, wird die Funktion mem_store aufgerufen, die wiederum die Invariante is_valid auswertet. Da die Zeiger-Variable message zu diesem Zeitpunkt immer noch NULL ist, wird eine Fehlermeldung ausgegeben.

Das Verfahren weist in der vorgestellten Form einige Beschränkungen auf, die jedoch bei Bedarf leicht beseitigt werden können:
Damit pro Thread nicht nur eine Invariante verwaltet werden kann, sondern auch verschachtelte Invarianten möglich sind, wird optional die Menge addresses in der Datenstruktur TAB durch einen Stapel von Mengen ersetzt, wobei die oberste Menge der innersten Invariante zugeordnet ist.

Damit auch dynamisch wachsende Datenstrukturen, wie bspw. Listen, unterstützt werden, werden die relevanten Adressen nicht nur einmal zu Beginn, sondern bei jeder Änderung einer betroffenen Speicherstelle ermittelt. So wird z.B. beim Anhängen eines Elements an eine Liste die Aufzeichnung noch einmal gestartet. Auf diese Weise werden auch neu hinzugekommene Adressen im weiteren Verlauf des Programms berücksichtigt.

Damit für das Durchsuchen aller Einträge innerhalb der Funktion mem_store u.U. weniger Zeit benötigt wird bzw. das Verfahren beschleunigt wird, kann optional zusätzlich zu der Datenstruktur TAB eine Hashtabelle angelegt werden, in der für jede unter Beobachtung stehende Adresse ein Eintrag angelegt wird, der Zeiger auf die betroffenen Einträge in der Datenstruktur enthält.

Im Falle statischer Datenstrukturen kann das Verfahren optional dahingehend vereinfacht werden, dass anstelle der automatischen Adressaufzeichnung die relevanten Adressen explizit vom Benutzer angegeben werden.

### Listing

```
 struct invariant {
 // Eine Invariante ist eine Funktion ohne Argumente, die boolschen Wert zu-
 rückgibt
 function<void, bool> invariant;
 // Speicherorte von der die Invariante abhängt
 concurrent_set<uintptr_t> addresses; // Flag das anzeigt, ob Adressen gespei-
 chert wurden
 atomic<bool> record;
 };
 // Jeder Thread hat eine zugehörige Invariante
 invariant invariants[MAX_THREADS];
 
 // Diese Funktion muss vom Benutzer zu Beginn einer Invarianten aufgerufen wer-
 den
 void inv_begin(function<void, bool> inv) {
 int tid = get_current_thread_id(); // hole Thread ID
 invariants[tid].invariant = inv; // Speichere Invariante
 invariants[tid].addresses.clear(); // Lösche Adressen
 invariants[tid].record = true; // Ermögliche Aufzeichnung
 bool result = inv(); // Führe Invariante aus
 invariants[tid].record = false; // Unterbinde Aufzeichnung
 if(!result) { // Ist Invariante erfüllt?
 cerr « "Invariante ist nicht erfüllt" « endl; // Fehlermeldung ausgeben
  }
 }
 
 // Diese Funktion muss vom Benutzer am Ende eine Invarianten aufgerufen werden
 void inv_end() {
 int tid = get_current_thread_id(); // hole Thread ID
 invariants[tid].addresses.clear(); // Lösche Adressen
 }
 
 // Diese Funktion wird automatisch aufgerufen nachdem ein Ladebefehl ausgeführt
 wurde
 void mem_load(uintptr_t address) {
 int tid = get_current_thread_id(); // hole Thread ID
 if(invariants[tid].record) { // Aufzeichnung ermöglicht?
 invariants[tid].addresses.insert(address); // speichere Adresse
  }
 }
 
 // Diese Funktion wird automatisch aufgerufen nachdem ein Speicherbefehl ausge-
 führt wurde
 void mem_store(uintptr_t address) {
 for(int tid = 0; tid < MAX_THREADS; tid++) { // überprüfe alle Einträge
 if(!invariants[tid].record) { // Aufzeichnung unterbunden?
  if(invariants[tid].addresses.find(address)) { // Adresse gefunden?
   if(!invariants[tid].inv()) { // Ist Invariante erfüllt?
    cerr « "Invariante ist nicht erfüllt" « endl; // Fehlermeldung ausgeben
     }
    }
   }
  }
 }
```

## Patentansprüche

1. Verfahren zur Überprüfung von Invarianten in einem parallelen Programm,
- bei dem eine Invariante in Form einer parameterlosen Funktion (invariant) angegeben wird, die einen Boole'schen Wert zurückliefert,
- bei dem in einer Bibliothek (B) Funktionen (inv_begin, inv_end) zur Festlegung des Gültigkeitsbereiches von Invarianten durch einen Benutzer und Funktionen (mem_load, mem_store) zum automatischen Aufruf bei Lade- und Speicherbefehlen vorhanden sind und als Bibliotheks-Binärcode (BC) zur Verfügung stehen,
- bei dem zunächst der Quelltext eines Programmes (P) durch den Benutzer um die zu überprüfenden Invarianten (I) ergänzt wird, wobei dies mit Hilfe der Funktionen (inv_begin, inv_end) zur Festlegung des Gültigkeitsbereiches von Invarianten in Form einer Invariantenbeginn-Funktion (inv_begin) und einer Invariantenende-Funktion (inv_end) erfolgt,
- bei dem der Quelltext (PI) mit dem Programm (P) und den Invarianten (I) in eine entsprechende ausführbare Datei (D) übersetzt wird, die dann mit Hilfe des Bibliotheks-Binärcodes (BC) instrumentiert und ausgeführt wird,
- bei dem eine interne Datenstruktur (TAB) erzeugt wird, in der mindestens eine jeweilige Invariante (invariant) gespeichert wird, wobei die jeweilige Invariante mindestens eine Speicherstelle (addresses) von der sie abhängt, und einen Boole'schen Wert (record), der angibt, ob eine Aufzeichnung aktiv ist, aufweist,
- bei dem durch die Ausführung der Invariantenbeginn-Funktion (inv_begin) die Aufzeichnung die betreffende Invariante aktiviert und diese ausgeführt wird sowie durch die Invariantenende-Funktion (inv_end) der entsprechende Eintrag in der internen Datenstruktur zurückgesetzt wird,- bei dem durch die Instrumentierung für jeden Ladebefehl eine entsprechenden Lade-Funktion (mem_load) der Funktionen zum automatischen Aufruf bei Lade- und Speicherbefehlen aufgerufen wird, die die betroffenen Adressen von Speicherstellen (addresses) aufzeichnen, sofern die Aufzeichnung aktiviert ist, und für jeden Speicherbefehl eine entsprechenden Speicher-Funktion (mem_store) der Funktionen zum automatischen Aufruf bei Lade- und Speicherbefehlen aufgerufen wird, die die betroffenen Invarianten (invariant) auf ihre Gültigkeit überprüfen, und
- bei dem, bei dynamisch erzeugten Datenstrukturen, die für die Überprüfung relevanten Adressen nicht nur einmal zu Beginn, sondern bei jeder Änderung einer betroffenen Speicherstelle ermittelt werden.

2. Verfahren nach Anspruch 1,
bei dem eine interne Datenstruktur in Form einer Tabelle (TAB) erzeugt wird, in der für jeden Thread (T₁...Tₙ) eine jeweilige Invariante (invariant) gespeichert wird, wobei die jeweilige Invariante mindestens eine Speicherstelle (addresses) von der sie abhängt, und einen Boole'schen Wert (record), der angibt, ob eine Aufzeichnung aktiv ist, aufweist.

3. Verfahren nach Anspruch 1 oder 2,
bei dem, bei verschachtelten Invarianten, die Adress-Mengen (addresses) in der Datenstruktur (TAB) durch einen Stapel von Adress-Mengen ersetzt werden, wobei die oberste Adress-Menge der innersten Invariante zugeordnet ist.

4. Verfahren nach Anspruch 1 oder 2,
bei dem zusätzlich zu der Datenstruktur (TAB) eine Hashtabelle angelegt wird, in der für jede unter Beobachtung stehende Adresse ein Eintrag angelegt wird, der Zeiger auf die betroffenen Einträge in der Datenstruktur enthält und bei dem innerhalb der Speicher-Funktion (mem_store) der Funktionen zum automatischen Aufruf bei Lade- und Speicherbefehlen das Durchsuchen aller Einträge mit Hilfe dieser Hashtabelle erfolgt.

5. Verfahren nach einem der vorhergehenden Ansprüche,
bei dem eine Fehlermeldung (F) ausgegeben wird, sofern eine Invariante nicht bzw. nicht mehr gilt.

## Claims

1. Method for checking invariants in a parallel program,
- wherein an invariant in the form of a function without parameters *(invariant)* which returns a Boolean value is declared,
- wherein functions (*inv_begin, inv end*) for specifying the scope of validity of invariants by a user, and functions (*mem_load, mem_store*) for automatic calling with load and store commands are present in a library (B) and are available as binary library code (BC),
- wherein the source code of a program (P) is first supplemented by the user by the invariants (I) to be checked, wherein this is done with the aid of the functions (*inv_begin, inv_end*) for specifying the scope of validity of invariants in the form of an invariant begin function (*inv*_*begin*) and of an invariant end function (*inv_end*),
- wherein the source code (PI), along with the program (P) and the invariants (I), is translated into a corresponding executable file (D) which is then instrumented with the aid of the binary library code (BC) and executed,
- wherein an internal data structure (TAB) is generated in which at least one respective invariant *(invariant)* is stored, wherein the respective invariant comprises at least one memory location *(addresses)* on which it depends, and a Boolean value (*record*) which indicates whether recording is enabled,
- wherein, through the execution of the begin invariant function (*inv_begin*), the recording of the invariant concerned is activated and is carried out, along with the corresponding entry in the internal data structure being reset by the end invariant function (*inv*_*end*),
- wherein a corresponding load function (*mem_load*) of the functions for automatic calling with load and store commands is called by the instrumentation for each load command and records the addresses of memory locations *(addresses)* concerned for as long as the recording is enabled, and a corresponding store function (*mem_store*) of the functions for automatic calling with load and store commands is called for each store command and checks the invariants *(invariant)* concerned for their validity, and
- in which, with dynamically generated data structures, the addresses relevant for the check are not only determined once at the beginning, but at every change of an affected memory location.

2. Method according to Claim 1,
wherein an internal data structure in the form of a table (TAB) is generated, in which a respective invariant *(invariant)* is stored for each thread (T₁...Tₙ), wherein the respective invariant comprises at least one memory location *(addresses)* on which it depends and a Boolean value (*record*) that indicates whether recording is enabled.

3. Method according to Claim 1 or 2,
in which, in the case of nested invariants, the address sets *(addresses)* are replaced in the data structure (TAB) by a stack of address sets, wherein the topmost address set is assigned to the innermost invariant.

4. Method according to Claim 1 or 2,
in which, in addition to the data structure (TAB), a hash table is created in which an entry is made for every address under observation containing pointers to the entries concerned in the data structure, and wherein searching through all the entries is performed with the aid of this hash table in the store function (*mem*_*store*) of the functions for automatically calling with load and store commands.

5. Method according to one of the previous claims, in which an error message (F) is output for as long as an invariant is not valid or is no longer valid.

## Revendications

1. Procédé de vérification d'invariants dans un programme parallèle, dans lequel :
- un invariant est indiqué sous la forme d'une fonction sans paramètre (invariant) qui fournit en retour une valeur booléenne ;
- des fonctions (inv_begin, inv_end) pour la détermination de la zone de validité d'invariants par un utilisateur et des fonctions (mem_load, mem_store) pour l'appel automatique dans le cas d'ordres de chargement et de sauvegarde existent dans une bibliothèque (B) et sont disponibles en tant que code binaire de bibliothèque (BC) ;
- le texte source d'un programme (P) est tout d'abord complété par l'utilisateur avec les invariants à vérifier (I), cela se faisant à l'aide des fonctions (inv_begin, inv_end) pour la détermination de la zone de validité d'invariants sous la forme d'une fonction de début d'invariant (inv_begin) et d'une fonction de fin d'invariant (inv_end) ;
- le texte source (PI) avec le programme (P) et les invariants (I) est traduit en un fichier exécutable correspondant (D) qui est alors instrumenté et exécuté à l'aide du code binaire de bibliothèque (BC) ;
- une structure de données interne (TAB) est générée, dans laquelle au moins un invariant respectif (invariant) est sauvegardé, l'invariant respectif comportant au moins un emplacement de mémoire (addresses), dont il est fonction, et une valeur booléenne (record) qui indique si un enregistrement est actif ;
- l'enregistrement de l'invariant concerné est activé par l'exécution de la fonction de début d'invariant (inv_begin) et est exécuté, et l'entrée correspondante est réinitialisée dans la structure de données interne par la fonction de fin d'invariant (inv_end) ;
- par l'instrumentation est appelée, pour chaque ordre de chargement, une fonction de chargement correspondante (mem_load) des fonctions pour l'appel automatique en cas d'ordres de chargement et de sauvegarde qui enregistrent les adresses concernées d'emplacements de mémoire (addresses), dans la mesure où l'enregistrement est actif, et pour chaque ordre de sauvegarde est appelée une fonction de sauvegarde correspondante (mem_store) des fonctions pour l'appel automatique en cas d'ordres de chargement et de sauvegarde qui vérifient les invariants concernés (invariant) quant à leur validité et
- dans le cas de structures de données générées dynamiquement, les adresses pertinentes pour la vérification sont déterminées non pas seulement une fois au début, mais à chaque modification d'un emplacement de mémoire concerné.

2. Procédé selon la revendication 1, dans lequel une structure de données interne est générée sous la forme d'une table (TAB) dans laquelle un invariant respectif (invariant) est sauvegardé pour chaque thread (T₁ ... Tₙ), l'invariant respectif comportant au moins un emplacement de mémoire (addresses), dont il est fonction, et une valeur booléenne (record) qui indique si un enregistrement est actif.

3. Procédé selon la revendication 1 ou 2, dans lequel, étant donné des invariants imbriqués, les ensembles d'adresses (addresses) dans la structure de données (TAB) sont remplacés par une pile d'ensembles d'adresses, l'ensemble d'adresses supérieur étant associé à l'invariant le plus intérieur.

4. Procédé selon la revendication 1 ou 2, dans lequel est créé, en plus de la structure de données (TAB), une table de hachage dans laquelle est créée, pour chaque adresse sous observation, une entrée qui contient des indicateurs des entrées concernées dans la structure de données et dans lequel a lieu, dans la fonction de sauvegarde (mem_store) des fonctions pour l'appel automatique en cas d'ordres de chargement et de sauvegarde, l'exploration de toutes les entrées à l'aide de cette table de hachage.

5. Procédé selon l'une des revendications précédentes, dans lequel un message d'erreur (F) est émis dans la mesure où un invariant n'est pas resp. n'est plus valable.
